# EUROPÄISCHE PATENTANMELDUNG

(11) **EP 3 441 523 A1**
(43) Veröffentlichungstag der Anmeldung: **13.02.2019**
(21) Anmeldenummer: 17185995.2
(22) Anmeldetag: 11.08.2017
(51) Int. Cl.: E01B 23/02, B25J 5/02

(54) **TRAGSCHIENE FÜR EINE TRANSLATIV VERFAHRBARE ROBOTERPLATTFORM**

(71) Anmelder: IPR-Intelligente Peripherien für Roboter GmbH, 75031 Eppingen (DE)
(72) Erfinder: Doll, Fredy, 77855 Achern (DE); Kollmar, Thomas, 74223 Flein (DE)
(74) Vertreter: Patentanwaltskanzlei Cartagena

(57) **Zusammenfassung**

Aus dem Stand der Technik bekannt ist eine Tragschiene (10) für eine translativ verfahrbare Roboterplattform (120), die in Art eines in einer Haupterstreckungsrichtung ausgerichteten länglichen Bauelements mit mindestens einer an der Außenseite vorgesehenen und in Haupterstreckungsrichtung erstreckten metallischen Führungsschiene (42) zur Führung der Roboterplattform (120) ausgebildet ist. Eine solche Tragschiene (10) weist in einem nach unten weisenden Teilabschnitt mindestens einen unteren metallischen Anschlussflansch (30) zur Befestigung der Tragschiene (10) auf einem Untergrund wie einem Hallenboden oder an einer Portalbasis auf. Sie weist weiterhin in einem nach oben weisenden Teilabschnitt an einer Außenseite mindestens einen oberen metallischen Anschlussflansch (40) zur Anbringung der metallischen Führungsschiene und/oder unmittelbar die mindestens eine metallische Führungsschiene (42) auf.

Es wird zur Verbesserung einer solchen Tragschiene insbesondere vorgeschlagen, dass die Tragschiene (10) über einen Tragstruktur (20) aus Beton verfügt, an deren Außenseite der untere metallische Anschlussflansch (30) sowie der obere Anschlussflansch (40) bzw. die Führungsschiene (42) angeordnet sind. Dabei sind der untere Anschlussflansch (30) einerseits und der obere Anschlussflansch bzw. die Führungsschiene andererseits durch eine an der Außenseite der Tragstruktur vorgesehene starre metallische Exoskelett-Struktur (90) verbunden, die die Tragstruktur zumindest teilweise und vorzugsweise vollständig umgibt.

## Beschreibung

### ANWENDUNGSGEBIET UND STAND DER TECHNIK

Die Erfindung betrifft eine Tragschiene für eine translativ verfahrbare Roboterplattform nach dem Oberbegriff der Ansprüche 1 und 4. Die Erfindung betrifft weiterhin ein Verfahrsystem mit einer solchen Tragschiene mitsamt Roboterplattform sowie Verfahren zur Herstellung einer erfindungsgemäßen Tragschiene.

Gattungsbildende Tragschienen sind aus dem Stand der Technik allgemein bekannt. Diese Tragschienen, die mitunter auch als siebte Achse oder als Fahrachse bezeichnet werden, dienen dem Zweck, mittels der darauf translativ verfahrbar angebrachten Roboterplattform einen herkömmlichen Industrieroboter horizontal translativ zu verfahren. Den Bedarf hierfür gibt es in vielen industriellen Anwendungsfeldern, beispielsweise in der Fertigung, wenn der Roboter an verschiedenen Stellen eingesetzt werden soll, oder in Fällen, in denen der Roboter bestimmungsgemäß selbst ein Werkstücklager anfahren können soll, um dort ein zu verbauendes Werkstück zu ergreifen. Insbesondere für den Bau von Personenkraftwagen sind solche Tragschienen bekannt. Sie werden hier an verschiedenen Bearbeitungspositionen eingesetzt, um eine Roboterplattform mit dem darauf angebrachten Roboter zwischen Fahrzeugheck und Fahrzeugfront verfahren zu können. Solche Tragschienen sind üblicherweise einige Meter, insbesondere etwa 6 m lang.

Gattungsgemäße Tragschienen werden üblicherweise mittels eines bodenseitigen Anschlussflansches auf einem Untergrund befestigt, insbesondere auf einem Hallenboden oder an einer Portalbasis in einigen Metern Höhe. An ihrer Oberseite, also der dem nicht zwingend horizontalen Untergrund gegenüberliegenden Seite, weisen sie üblicherweise eine Führungsschiene oder zwei zueinander beabstandete parallel verlaufende Führungsschienen auf, auf denen Räder der verfahrbaren Roboterplattform abrollen.

Bekannte Tragschienen sind als vollständig metallische Tragschienen, meist aus Aluminium oder Stahl, ausgebildet. Dies führt zu einem vergleichsweise hohen Preis der Tragschienen. Zudem ist nachteilig, dass solche Tragschienen schwer sind und der Transport entsprechend aufwändig. Eine Herstellung vor Ort am Verwendungsort ist in der Regel nicht möglich.

Aus der gegenüber dem Prioritätsdatum dieser Anmeldung nachveröffentlichten Europäischen Patentanmeldung EP17162660.9 ist eine Tragschiene bekannt, die bereits eine Tragstruktur aus Beton aufweist.

### AUFGABE UND LÖSUNG

Aufgabe der Erfindung ist es alternative Bauweisen für eine Tragschiene zur Verfügung zu stellen, die gegenüber den bisherigen vollständig metallischen Tragschienen Vorteile in Hinblick auf die Kosten, die Dämpfungseigenschaften und die Flexibilität bei der Herstellung bieten.

Gemäß einem ersten Aspekt der Erfindung wird hierzu eine Tragschiene für eine translativ verfahrbare Roboterplattform vorgeschlagen, die in Übereinstimmung mit den bekannten Tragschienen in Art eines in einer Haupterstreckungsrichtung ausgerichteten länglichen Bauelements ausgebildet ist, mit mindestens einer an der Außenseite vorgesehenen und in Haupterstreckungsrichtung erstreckten metallischen Führungsschiene zur Führung der Roboterplattform. Die Tragschiene hat in Haupterstreckungsrichtung vorzugsweise eine Länge von mindestens 3 m, vorzugsweise zwischen 4 m und 8 m, auf. Sie weist in einem nach unten weisenden Teilabschnitt mindestens einen unteren metallischen Anschlussflansch zur Befestigung der Tragschiene auf einem Untergrund wie einem Hallenboden oder an einer Portalbasis auf. Gegenüberliegend nach oben weisend weist die Tragschiene an einer Außenseite mindestens einen oberen metallischen Anschlussflansch zur Anbringung der metallischen Führungsschiene und/oder unmittelbar die mindestens eine metallische Führungsschiene auf.

"Unten" und "Oben" ist in diesem Kontext auf das Koordinatensystem der Tragschiene bezogen und bedeutet nicht zwingend, dass der untere Anschlussflansch zum Boden hin ausgerichtet sein muss, sondern in Richtung einer Anbringungsfläche, die zwar meist eine horizontale Bodenfläche ist, beispielsweise jedoch auch eine Portalbasis sein kann, an der die Tragschiene mit zur Seite oder gar nach oben weisender unterem Anschlussflansch festgelegt sein kann.

Bei der ersten Variante der Erfindung ist vorgesehen, dass diese Tragschiene über eine Tragstruktur aus Beton verfügt, die von einer metallischen Außenstruktur umgeben ist, welche durch ein metallisches Hohlprofil mit einer Wandungsstärke von maximal 8 mm gebildet ist. An der Außenseite des Hohlprofils oder als Teil des Hohlprofils sind der untere metallische Anschlussflansch sowie der obere Anschlussflansch bzw. die Führungsschiene vorgesehen. Zur Erzielung der erforderlichen Stabilität verfügt die Tragschiene über eine metallische Innenstruktur, die in den Beton der Tragstruktur eingebettet ist.

Bei einer solchen Tragschiene findet ein Hohlprofil Verwendung, das durch eine geringe Wandungsstärke besonders leicht ist. Die bevorzugte Wandungsstärke von 8 mm oder weniger, insbesondere von 6 mm oder weniger oder gar 4 mm oder weniger, ist alleine nicht in der Lage, die statischen und dynamischen Lasten einer im Betrieb befindlichen Roboterplattform zu tragen. Es hat sich jedoch gezeigt, dass sich ausreichende Belastbarkeit und gute Betriebseigenschaften dadurch erzielen lassen, dass das Hohlprofil mit Beton und der genannten metallischen Innenstruktur ausgebildet ist.

Die Innenstruktur kann im einfachsten Falle durch in Haupterstreckungsrichtung erstreckte Stangen gebildet sein, die vollständig in der Tragstruktur aus Beton eingebettet sind. Eine solche oder eine anderweitige Innenstruktur erstreckt sich vorzugweise über mindestens 60% oder gar mindestens 80% der Gesamtlänge der Tragstruktur. Statt einer vollständigen Einbettung kann auch vorgesehen sein, dass die Innenstruktur mindestens an einem Ende, vorzugsweise mindestens an beiden Enden, mit dem Hohlprofil verbunden ist, beispielsweise über eine Schraub- oder Schweißverbindung. Dies erleichtert die Herstellung der Tragstruktur und erlaubt es, über die Verbindungen Kräfte vom Hohlprofil unmittelbar in die Innenstruktur einzuleiten.

Vorzugsweise weist die Innenstruktur einen komplexeren Aufbau als nur in Haupterstreckungsrichtung erstreckte Stangen auf. So kann die metallische Innenstruktur mindestens ein in Haupterstreckungsrichtung ausgerichtetes und vorzugsweise stangenartiges Längssegment und eine Mehrzahl von sich in Querrichtung über das Längssegment erhebende Quersegmente aufweisen. Durch den hierdurch geschaffenen Formschluss zwischen der Tragstruktur und der metallischen Innenstruktur bezogen auf die Haupterstreckungsrichtung werden eine besonders feste Verankerung und eine sichere Kraftübertragungvon derTragstrukturaufdie metallische Innenstrukturund umgekehrt erzielt. Alternativ kann hierfür die metallische Innenstruktur eine Mehrzahl von in Haupterstreckungsrichtung ausgerichteten Längssegmenten aufweisen, die miteinander über eine Mehrzahl Quersegmente verbunden sind. So kann die Innenstruktur quasi eine Art Metallkäfig bilden, der in das Hohlprofil eingelegt ist.

Die Tragstruktur kann aus einfachem Baubeton / Zementbeton bestehen. Dies hat den Vorteil der einfachen Verfügbarkeit, so dass die Herstellung der Tragstruktur vor Ort am Aufstellungsort erfolgen kann und nur das Hohlprofil und/oder die Innenstruktur sowie ggf. weitere Anbauteile zugeliefert werden müssen. Je nach konkretem Anwendungsgebiet kann es auch zweckmäßig sein, dass höherwertiger Beton in Form von Polymerbeton verwendet wird. Auch ist es möglich, die Tragstruktur mit Fasereinlagen zu versehen, vorzugsweise mit Netzen oder Matten. Ein solcher Beton wird auch als Textilbeton bezeichnet.

Vorzugweise ist das Hohlprofil als umlaufend geschlossenes und vorzugweise längsgeschweißtes Hohlprofil ausgebildet, welches eine einheitliche Wandungsstärke aufweist. Ein solches Hohlprofil stellt eine sehr einfache Komponente dar, insbesondere wenn es sich um ein Hohlprofil mit rechteckigem Querschnitt handelt. Insbesondere vorzugsweise weicht die Querschnittsform des Hohlprofils von der Querschnittsform jedoch ab, so dass es auf Seite des unteren Anschlussflansches breiter als auf der des oberen Anschlussflansches ist.

Der untere metallische Anschlussflansch und/oder der obere metallische Anschlussflansch und/oder die mindestens eine metallische Führungsschiene sind vorzugsweise mittels einer Schweißverbindung an der Außenseite des Hohlprofiles befestigt. Es ist jedoch auch eine Gestaltung denkbar, bei der die Flansche unmittelbarer Teil des Hohlprofils sind, indem diese durch lokale Verdickungen in der Profilwandung gebildet sind, die mehr als die genannten 8 mm Wandungsstärke aufweisen, oder indem das Hohlprofil überwiegend durch Bleche gebildet wird, die zwischen den Flanschen eingeschweißt sind. Ein erfindungsgemäßes Hohlprofil muss nicht vollständig eine Wandungsstärke von insbesondere 8 mm oder weniger aufweisen. Es ist ausreichend, wenn die geringe Wandungsstärke bei mehr als 50% der Wandungsfläche gegeben ist. Bevorzugt ist allerdings ein Hohlprofil, welches vollständig oder nahezu vollständig (>90%) diese geringe Wandungsstärke aufweist.

Die zweite Variante der Erfindung geht ebenfalls von der genannten Gestaltung einer bekannten hauptsächlich metallischen Tragschiene aus. Abweichend hiervon verfügt auch diese zweite Variante der Erfindung über eine Tragstruktur aus Beton, an deren Außenseite der untere metallische Anschlussflansch sowie der obere Anschlussflansch bzw. die Führungsschiene angeordnet sind.

Besonders an dieser zweiten Variante ist, dass der untere Anschlussflansch einerseits und der obere Anschlussflansch bzw. die Führungsschiene andererseits durch eine an der Außenseite der Tragstruktur vorgesehene starre metallische Exoskelett-Struktur verbunden, die die Tragstruktur zumindest teilweise und vorzugsweise vollständig umgibt.

Bei einer solchen Tragschiene werden die Außenflächen der Tragschiene demnach zumindest teilweise und vorzugsweise überwiegend durch die Tragstruktur aus Beton oder gegebenenfalls eine darauf aufgebrachte nichtmetallische Beschichtung gebildet. Partiell bildet jedoch das Exoskelett diese Außenflächen, zumindest in einem Bereich zwischen dem unteren Anschlussflansch einerseits und dem oberen Anschlussflansch oder der Führungsschiene andererseits.

Insbesondere vorzugsweise weist die Exoskelett-Struktur mindestens einen umlaufenden RingAbschnitt und vorzugsweise eine Mehrzahl solcher umlaufender Ring-Abschnitte auf, durch die der mindestens eine untere Anschlussflansch einerseits und der mindestens eine obere Anschlussflansch bzw. die mindestens eine Führungsschiene andererseits ringförmig die Tragstruktur umgebend miteinander verbunden sind. Hierdurch wird ein hohes Maß an Stabilität erzielt.

Im einfachsten Falle einer Gestaltung nach dieser zweiten Variante sind jeweils nur ein oberer Anschlussflansch und ein unterer Anschlussflansch vorgesehen, die einseitig oder beidseitig durch Strukturelemente des Exoskeletts miteinander verbunden sind.

Eine aufgrund der Flexibilität bei der Anbringung an eine Bodenplatte oder eine Portalbasis besonders bevorzugte Gestaltung sieht vor, dass die Tragschiene zwei obere Anschlussflansche sowie zwei untere Anschlussflansche aufweist, die ringförmig über Strukturelemente miteinander verbunden sind. Hierbei sind also üblicherweise mindestens vier Strukturelemente vorgesehen, die jeweils die oberen und unteren Anschlussflansche untereinander verbinden bzw. die oberen und unteren Anschlussflansche paarweise miteinander verbinden und so eine Ringanordnung schaffen.

Wenn die Exoskelett-Struktur mindestens ein Strukturelement aufweist, welches am mindestens einen unteren Anschlussflansch einerseits und am mindestens einen oberen Anschlussflansch bzw. an der mindestens einen Führungsschiene andererseits befestigt ist, so wird es bevorzugt, wenn dies über eine Schweißverbindung erfolgt.

Wie auch die erste Variante der Erfindung kann auch diese zweite Variante über eine metallische Innenstruktur verfügen, die in den Beton der Tragstruktur eingebettet ist. In Hinblick auf die Ausgestaltung dieser Innenstruktur gelten die oben zur ersten Variante genannten Möglichkeiten und Vorteile.

Die genannten Anschlussflansche oder die Führungsschiene liegen vorzugsweise durch Angießen des Betons an die betreffende Komponente oder partiellem Umgießen der betreffenden Komponente unmittelbar bündig an der Tragstruktur aus Beton an, so dass sich hier eine besonders feste Verbindung ergibt. Insbesondere vorzugsweise sind die Anschlussflansche und/oder die Führungsschiene mit Zuganker versehen, die formschlüssig gesichert bis in die Tragstruktur aus Beton reicht.

Der mindestens eine untere metallische Anschlussflansch wird vorzugsweise durch mindestens eine Bodenplatte gebildet, die Bohrungen zur Anbringung am Untergrund aufweist, wobei vorzugsweise eine Mehrzahl von zueinander beabstandeten Bodenplatten vorgesehen ist. Alternativ kann auch vorgesehen sein, dass der mindestens eine untere metallische Anschlussflansch mindestens eine Gewindebohrung zur Anbringung einer Bodenplatte aufweist, wobei vorzugsweise eine Mehrzahl von Gewindebohrungen zur Anbringung einer Mehrzahl von Bodenplatten vorgesehen ist.

Die beschriebene Tragschiene gemäß der ersten oder der zweiten Variante der Erfindung findet bestimmungsgemäß Verwendung als Teil eines Verfahrsystems für einen Roboter, welches neben der mindestens einen Tragschiene eine Roboterplattform aufweist, auf der bestimmungsgemäß ein Roboter angeordnet wird.

Weiterhin betrifft die Erfindung ein Verfahren zur Herstellung einer Tragschiene nach der ersten und der zweiten Variante.

Eine Tragschiene gemäß der zweiten Variante der Erfindung wird vorzugsweise derart hergestellt, dass zunächst eine Metallstruktur erstellt wird, die ein Exoskelett und mindestens einen unteren metallischen Anschlussflansch und mindestens einen oberen metallischen Anschlussflansch bzw. eine Führungsschiene umfasst, wobei diese mindestens zwei Teile vorzugsweise mit dem Exoskelett verschweißt sind und damit quasi einen Teil des Exoskeletts bilden.

Die Metallstruktur umfasst also sowohl den unteren als auch den oberen Anschlussflansch bzw. ggf. direkt die Führungsschiene. Insbesondere können zwei oberen Anschlussflansche bzw. Führungsschienen vorgesehen sein. Auch können zwei abseits des Exoskeletts getrennte untere Anschlussflansche vorgesehen sein. Das Exoskelett verbindet die unteren und oberen Anschlussflansche miteinander und vorzugsweise auch die mehreren Anschlussflansche oben bzw. unten untereinander.

Die genannte Metallstrukturwird anschließend in eine Schalung eingelegt, wobei die Schalung an die Formgebung der Metallstruktur derart angepasst ist, dass eine Außenseite des Exoskeletts zumindest abschnittsweise flächig an der Schalung anliegt. Insbesondere vorzugsweise liegen alle Strukturelemente des Exoskeletts, die Anschlussflansche miteinander verbinden, flächig an der Schalung an, so dass sich zusammen mit den Anschlussflanschen ein ringförmiger metallischer Bereich ergibt, der umlaufend die Außenseite bildet.

Anschließend wird die Schalung mit Beton ausgegossen, so dass hierdurch die Tragstruktur gebildet wird, wobei das Exoskelett und der mindestens eine Anschlussflansch bzw. die Führungsschiene zumindest abschnittsweise außerhalb einer Oberfläche der Tragstruktur angeordnet sind. Vorzugsweise bildet das Exoskelett zusammen mit den Anschlussflanschen umlaufende ringförmige Außenflächen aus Metall.

Zur Herstellung einer Tragschiene gemäß der ersten Variante der Erfindung wird ein Verfahren vorgeschlagen, bei dem zunächst ein metallisches Hohlprofil mit einer Wandungsstärke von maximal 8 mm als äußere Begrenzung der Tragstruktur bereitgestellt wird. Dieses kann beispielsweise als einheitliches und längsgeschweißtes Hohlprofil hergestellt worden sein. Es kann jedoch auch aus Einzelblechen hergestellt sein, die an die Anschlussflansche angeschweißt sind und hierdurch ein Hohlprofil bilden.

In dieses Hohlprofil wird eine metallische Innenstruktur eingelegt. Diese kann durch temporäre Stützmittel relativ zum Hohlprofil positioniert werden. Sie kann aber auch fest mit dem Hohlprofil verbunden sein.

Anschließend wird das Hohlprofil mit Beton ausgegossen, so dass hierdurch die Tragstruktur gebildet wird, die außenseitig durch die Wandungen des Hohlprofiles begrenzt ist und in die die Innenstruktur eingebettet ist. Nach Erstarren des Betons ist die Tragschiene fertig, kann jedoch mit weiteren Anbauteilen ausgerüstet werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Robotersystem in Gesamtdarstellung.
Fig. 2 und 3 zeigen eine Tragschiene gemäß der oben genannten zweiten Variante der Erfindung.
Fig. 4 zeigt eine Alternative zur Ausgestaltung gemäß Fig. 2 und 3.
Fig. 5A-5E verdeutlichen ein Verfahren zur Herstellung der Tragschiene gemäß den Fig. 2 und 3.
Fig. 6 und 7 zeigen eine Tragschiene gemäß der oben genannten ersten Variante der Erfindung.

### DETAILLIERTE BESCHREIBUNG DERAUSFÜHRUNGSBEISPIELE

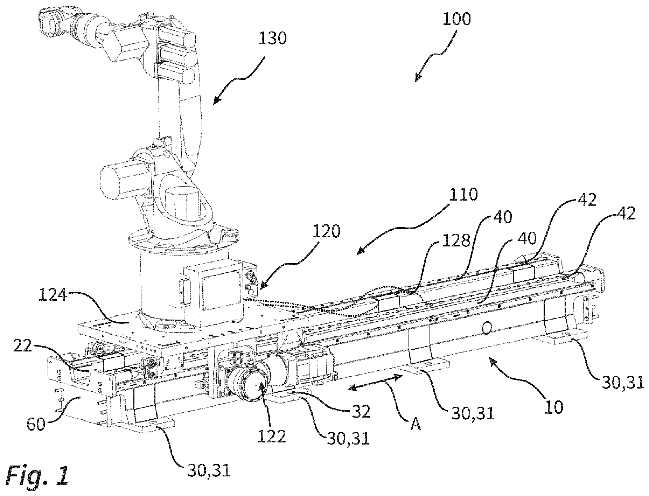

Fig. 1 zeigt ein erfindungsgemäßes Robotersystem 100, welches insbesondere im Rahmen der Fertigung eingesetzt werden kann.

Das Robotersystem 100 verfügt über ein Verfahrsystem 110, umfassend eine horizontal ausgerichtete Tragschiene 10 und eine auf dieser Tragschiene 10 in Haupterstreckungsrichtung A der Tragschiene 10 verfahrbare Plattform 120. Die Tragschiene 10 weist an ihrer Unterseite Anschlussflansche 30 in Form von Bodenplatten 31 auf, die mit Bohrungen 32 versehen sind, um auf einem Untergrund, insbesondere einem Hallenboden oder an einer hierfür vorgesehenen Portalbasis, sicher befestigt zu werden. An der Oberseite der Tragschiene 10 sind zwei parallele, voneinander beabstandete Anschlussflansche 40 vorgesehen, an denen jeweils eine Führungsschiene 42 festgeschraubt ist. Auf diesen Führungsschienen kann die Plattform 120 verfahren werden, wobei sie hierfür über Rollen verfügt. Der Antrieb erfolgt über einen Motor 122, der ein nicht dargestelltes Ritzel antreibt, welches mit einer Zahnstange an der Tragschiene 10 zusammenwirkt. Endseitig sind an der Tragschiene 10 jeweils Endanschläge vorgesehen, um die Beweglichkeit der Plattform 120 zu limitieren. Auf der Oberseite 124 der Plattform 120 ist ein Industrieroboter 130 mit mehrachsig verschwenkbarem Roboterarm vorgesehen.

Durch die Anbringung des Industrieroboters 130 auf der Plattform 120 gewinnt der Roboter einen weiteren Freiheitsgrad, der beispielsweise genutzt werden kann, um weiter voneinander beabstandete Bearbeitungsorte zu erreichen oder ein Lager anzufahren, um von hier Bauteile zu holen. Insbesondere kann der Industrieroboters 130 hierdurch zwischen dem Heck und der Front eines in der Fertigung befindlichen Fahrzeugs bewegt werden.

Für die Versorgung der Plattform 120 und des Industrieroboters 130 ist ein gestrichelt dargestellter Leitungsstrang 128 vorgesehen, der in einer wannenartigen Mulde 22 zwischen den Führungsschienen 42 aufgenommen ist.

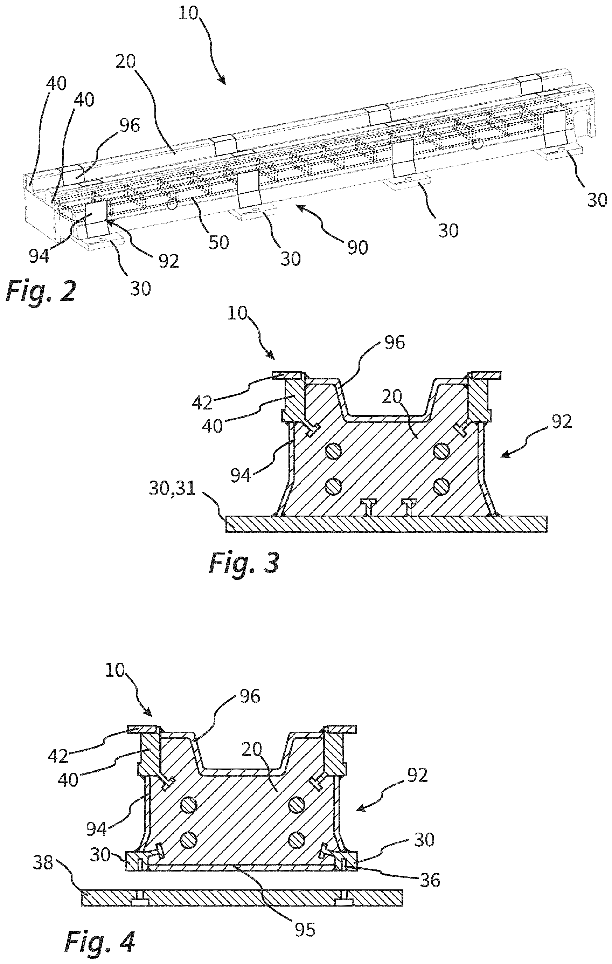

Fig. 2 zeigt eine erste Variante einer Tragschiene 10 für das Robotersystem 100 der Fig. 1.

Diese Tragschiene verfügt über die beiden bereits genannten oberen Anschlussflansche 40 sowie die einen unteren Anschlussflansch bildenden Bodenplatten 30. Zum überwiegenden Teil wird die Tragschiene 10 durch eine Tragstruktur 20 aus Beton gebildet, die abseits der Flansche und der im Weiteren noch erläuterten Exoskelett-Struktur die Außenflächen der Tragschiene 10 bilden. Die oberen Anschlussflansche 40 sind ebenso wie die unteren Anschlussflansche 30 mit Zugankern versehen, um in der Tragstruktur 20 aus Beton einen sicheren Halt zu haben. Zusätzlich ist die bereits genannte Exoskelett-Struktur 90 vorgesehen, die aus metallischen Strukturelementen 94, 96 besteht.

Anhand der Fig. 3 ist der Aufbau im Querschnitt dargestellt. Es ist zu ersehen, dass die oberen Anschlussflansche 40 über seitliche Strukturelemente 94 mit dem unteren Anschlussflansch 30 verbunden sind. Die Verbindung zwischen den Strukturelementen 94 und dem unteren Anschlussflansch 30 und den oberen Anschlussflanschen 40 ist hier jeweils eine Schweißverbindung. Zusätzlich ist ein oberes Strukturelement 96 vorgesehen, welches mittels Schweißverbindungen an beiden oberen Anschlussflanschen 40 festgeschweißt ist und diese verbindet, so dass sich insgesamt eine ringförmig umlaufende Struktur um die Tragstruktur 20 ergibt.

Wie sich insbesondere anhand der Fig. 2 ersehen lässt, umgeben die so gebildeten Exoskelett-Ringe 92 die Tragstruktur 20 nur partiell. Zwischen den Ringen 92 wird dagegen die Außenfläche der Tragschiene 10 durch die Oberfläche der Tragstruktur 20 aus Beton gebildet.

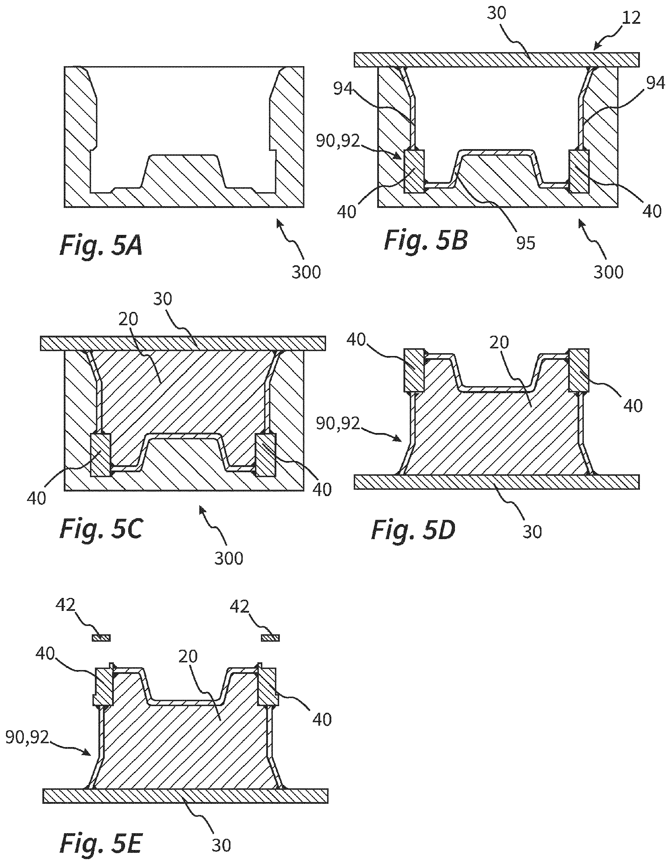

Ergebnis ist, dass eine Tragschiene entsprechend der Fig. 2 und 3 recht preisgünstig herstellbar ist. Insbesondere ist verglichen mit dem Gesamtgewicht der Tragschiene 10 das Gewicht der Metallstruktur mit den Anschlussflanschen und der Exoskelett-Struktur 90 vergleichsweise leicht, was den Transport zu einem Verwendungsort erleichtert. Die für die Stabilität und insbesondere auch die Dämpfung der Tragschiene erforderliche Tragstruktur 20 aus Beton ist in der Herstellung nicht sehr anspruchsvoll, so dass dies üblicherweise vor Ort erfolgen kann. Die Art der Herstellung wird im Weiteren noch anhand der Fig. 5A bis 5E erläutert.

Bevor auf diese Herstellung eingegangen wird, zunächst zur variante der Fig. 4. Das Grundkonzept bei dem Ausführungsbeispiel der Fig. 3 ist sehr ähnlich. Allerdings sind zwei untere Anschlussflansche 30 vorgesehen, die nicht in Art einer Bodenplatte ausgebildet sind, sondern bestimmungsgemäß mit einer zusätzlichen Bodenplatte 38 mittels einer Schraubverbindung verbunden werden. Aus diesem Grund hat die Tragschiene 10 der Fig. 4 insgesamt vier untere und obere Anschlussflansche 30, 40. Es ist daher ein zusätzliches unteres Strukturelement 95 vorgesehen, mittels dessen die beiden unteren Anschlussflansche 30 miteinander verbunden werden.

Die Herstellung einer Tragschiene entsprechend der Fig. 2 und 3 wird anhand der Fig. 5A bis 5E erläutert. Fig. 5A zeigt eine Schalung 300 im Querschnitt, die hierbei Verwendung findet. Wie in Fig. 5B dargestellt ist, wird zunächst eine Metallstruktur 12 in die Schalung 300 eingelegt, wobei diese Metallstruktur 12 sowohl den unteren Anschlussflansch 30 als auch die oberen Anschlussflansche 40,jeweils noch in unbearbeiteter Form, umfasst. Weiterhin umfasst die Metallstruktur 12 die bereits genannten Strukturelemente 94, 95, die über Schweißverbindungen mit den Flanschen 30, 40 verbunden sind und eine Art ringförmige Struktur 92 bilden.

Ausgehend von diesem Zustand der Fig. 5B erfolgt dann die Einbringung der Tragstruktur 20 aus Beton. Hierzu wird der flüssige Beton in die Schalung eingefüllt, so dass er den Innenbereich, der auch durch die Anschlussflansche 30, 40 und die Strukturelemente 94, 95 umgeben wird, ausfüllt. Die Außenseiten des Exoskeletts 90, insbesondere die Außenseiten der Strukturelemente 94, 95, liegen dabei an der Schalung 300 an, so dass sie nicht von Beton umgeben werden.

Nach Aushärten der Tragstruktur 20 wird die noch unfertige Tragschiene 10 aus der Schalung entnommen und im Ausführungsbeispiel in ihre aufrechte Lage verbracht, wie die Fig. 5D zeigt. Abschließend erfolgt eine spanende Bearbeitung der Anschlussflansche 30, 40. Hierdurch wird erzielt, dass etwaige Ungenauigkeiten, die sich in den vorherigen Fertigungsschritten ergeben, keine Auswirkungen auf die Genauigkeit der Positionierung von Führungsschienen 42 haben, die bestimmungsgemäß an den oberen Anschlussflanschen 40 angebracht werden.

Fig. 5E zeigt die Tragschiene 10 nach der spanenden Bearbeitung, bevor die Führungsschienen 42 angebracht werden.

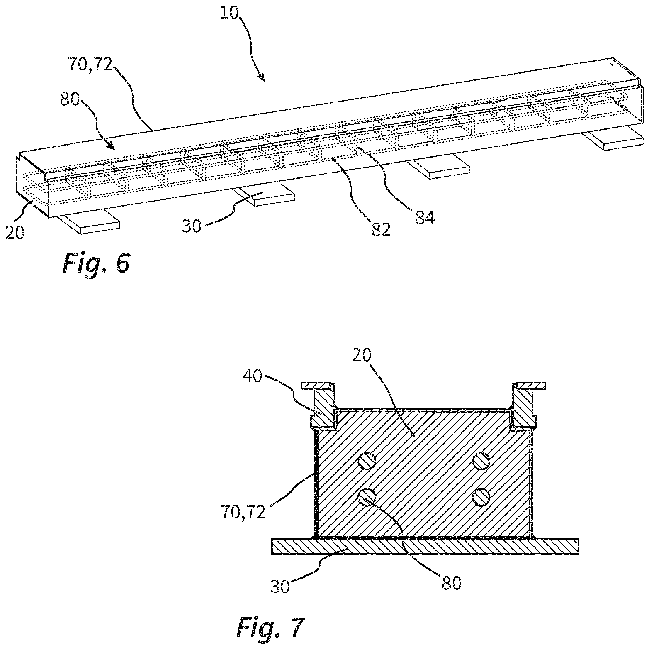

Die Fig. 6 und 7 zeigen eine alternative Ausgestaltung einer Tragschiene 10, die jedoch ebenfalls als Verbund-Tragschiene aus Beton und Metall gefertigt ist.

Bei dieser Ausgestaltung findet erfindungsgemäß eine metallische Außenstruktur 70 in Art eines metallischen Hohlprofils 72 Verwendung, dessen Wandungen mit einer Dicke von maximal 8 mm und vorzugsweise weniger als 6 mm alleine nicht ausreichen, um die erforderlichen Lasten zu tragen. Allerdings ist ein solches Hohlprofil in der Herstellung vergleichsweise günstig und weist vor allen Dingen geringe Materialkosten auf. Um die erforderliche Stabilität zu erzielen, ist der Innenbereich des Hohlprofils 72 mit einer Tragstruktur aus Beton versehen, die diesen Innenraum weitgehend vollständig ausfüllt. In diese Tragstruktur aus Beton ist eine metallische Innenstruktur 80 eingelegt, die bei der exemplarischen Gestaltung insgesamt vier in Längsrichtung erstreckte Längssegmente 82 aufweist, die untereinander durch Quersegmente 84 verbunden sind.

Es hat sich gezeigt, dass eine solche Struktur unter relevant vermindertem Materialeinsatz beim Metall eine für eine Tragschiene der gattungsgemäßen Art ausreichende Stabilität aufweist. Wie Fig. 7 zeigt, ist die Tragschiene zusätzlich mit einem unteren bodenseitigen Anschlussflansch 30 sowie oberen Anschlussflanschen 40 zur Anbringung der Führungsschienen 42 versehen, die bei diesem Ausführungsbeispiel außenseitig an das Hohlprofil 72 angeschweißt sind. Alternativ könnten die jeweiligen Anschlussflansche 30, 40 jedoch auch integraler Bestandteil des Hohlprofils sein, welches dann insbesondere vorzugsweise aus Metallblechen und den jeweiligen Anschlussflanschen 30, 40 gebildet ist.

## Patentansprüche

1. Tragschiene (10) für eine translativ verfahrbare Roboterplattform (120) mit den folgenden Merkmalen:
a. die Tragschiene (10) ist in Art eines in einer Haupterstreckungsrichtung ausgerichteten länglichen Bauelements mit mindestens einer an der Außenseite vorgesehenen und in Haupterstreckungsrichtung erstreckten metallischen Führungsschiene (42) zur Führung der Roboterplattform (120) ausgebildet, und
b. die Tragschiene (10) weist in einem nach unten weisenden Teilabschnitt mindestens einen unteren metallischen Anschlussflansch (30) zur Befestigung der Tragschiene (10) auf einem Untergrund wie einem Hallenboden oder an einer Portalbasis auf, und
c. die Tragschiene (10) weist in einem nach oben weisenden Teilabschnitt an einerAußenseite mindestens einen oberen metallischen Anschlussflansch (40) zur Anbringung der metallischen Führungsschiene und/oder unmittelbar die mindestens eine metallische Führungsschiene (42) auf,
**gekennzeichnet durch** die folgenden Merkmale:
d. die Tragschiene (10) verfügt über einen Tragstruktur (20) aus Beton, und
e. die Tragschiene (10) verfügt über eine die Tragstruktur (20) umgebende metallische Außenstruktur (70), die durch ein metallisches Hohlprofil (72) mit einer Wandungsstärke von maximal 8 mm gebildet ist und als dessen Teil oder an dessen Außenseite der untere metallische Anschlussflansch (30) sowie der obere Anschlussflansch (40) bzw. die Führungsschiene (42) vorgesehen sind, und
f. die Tragschiene (10) verfügt über eine metallische Innenstruktur (80), die in den Beton der Tragstruktur (20) eingebettet ist.

2. Tragschiene (10) nach Anspruch 1 mit den folgenden zusätzlichen Merkmalen:
a. das metallische Hohlprofil (72) weist eine Wandungsstärke von maximal 6 mm, vorzugsweise von maximal 4 mm auf.

3. Tragschiene (10) nach Anspruch 1 oder 2 mit den folgenden zusätzlichen Merkmalen:
a. der unteren metallische Anschlussflansch und/oder der obere metallischen Anschlussflansch und/oder die mindestens eine metallische Führungsschiene ist mittels einer Schweißverbindung an der Außenseite des Hohlprofiles befestigt.

4. Tragschiene (10) für eine translativ verfahrbare Roboterplattform (120) mit den folgenden Merkmalen:
a. die Tragschiene (10) ist in Art eines in einer Haupterstreckungsrichtung ausgerichteten länglichen Bauelements mit mindestens einer an der Außenseite vorgesehenen und in Haupterstreckungsrichtung erstreckten metallischen Führungsschiene (42) zur Führung der Roboterplattform (120) ausgebildet, und
b. die Tragschiene (10) weist in einem nach unten weisenden Teilabschnitt mindestens einen unteren metallischen Anschlussflansch (30) zur Befestigung der Tragschiene (10) auf einem Untergrund wie einem Hallenboden oder an einer Portalbasis auf, und
c. die Tragschiene (10) weist in einem nach oben weisenden Teilabschnitt an einerAußenseite mindestens einen oberen metallischen Anschlussflansch (40) zur Anbringung der metallischen Führungsschiene und/oder unmittelbar die mindestens eine metallische Führungsschiene (42) auf,
**gekennzeichnet durch** die folgenden Merkmale:
d. die Tragschiene (10) verfügt über einen Tragstruktur (20) aus Beton, an deren Außenseite der untere metallische Anschlussflansch (30) sowie der obere Anschlussflansch (40) bzw. die Führungsschiene (42) angeordnet sind, und
e. der untere Anschlussflansch (30) einerseits und der obere Anschlussflansch bzw. die Führungsschiene andererseits sind durch eine an der Außenseite der Tragstruktur vorgesehene starre metallische Exoskelett-Struktur (90) verbunden, die die Tragstruktur zumindest teilweise und vorzugsweise vollständig umgibt.

5. Tragschiene (10) nach Anspruch 4 mit dem folgenden zusätzlichen Merkmal:
a. die Exoskelett-Struktur (90) weist umlaufende Ring-Abschnitte (92) auf, durch die der mindestens eine untere Anschlussflansch (30) einerseits und der mindestens eine obere Anschlussflansch (40) bzw. die mindestens eine Führungsschiene (42) andererseits ringförmig die Tragstruktur (20) umgebend miteinander verbunden sind,
vorzugsweise mit dem folgenden zusätzlichen Merkmal:
b. die Tragschiene weist zwei obere Anschlussflansche sowie zwei untere Anschlussflansche auf, die ringförmig über Strukturelemente (94, 95, 96) miteinander verbunden sind.

6. Tragschiene (10) nach Anspruch 4 oder 5 mit den folgenden zusätzlichen Merkmalen:
a. die Exoskelett-Struktur (90) weist mindestens ein Strukturelement (94) auf, welches am mindestens einen unteren Anschlussflansch (30) einerseits und am mindestens einen oberen Anschlussflansch (40) bzw. an der mindestens einen Führungsschiene (42) andererseits angeschweißt ist.

7. Tragschiene (10) nach einem der Ansprüche 4 bis 6 mit den folgenden zusätzlichen Merkmalen:
a. die Tragschiene (10) verfügt über eine metallische Innenstruktur (80), die in den Beton der Tragstruktur (20) eingebettet ist.

8. Tragschiene (10) nach einem der Ansprüche 1 bis 3 oder 7 mit den folgenden zusätzlichen Merkmalen:
a. die metallische Innenstruktur erstreckt sich mindestens über 60% der Länge der Tragstruktur, insbesondere über mindestens 80% der Länge, und/oder
b. die metallische Innenstruktur ist mit dem Hohlprofil unmittelbar verbunden, vorzugsweise über eine Schweißverbindung.

9. Tragschiene (10) nach einem der Ansprüche 1 bis 3, 7 oder 8 mit den folgenden zusätzlichen Merkmalen:
a. die metallische Innenstruktur weist mindestens ein in Haupterstreckungsrichtung ausgerichtetes Längssegment (82) und eine Mehrzahl von sich in Querrichtung über das Längssegment erhebende Quersegmente (84) auf, und/der
b. die metallische Innenstruktur weist eine Mehrzahl von in Haupterstreckungsrichtung ausgerichteten Längssegmenten (82) auf, die miteinander über Quersegmente (84) verbunden sind.

10. Tragschiene (10) nach einem der vorstehenden Ansprüche mit dem folgenden zusätzlichen Merkmal:
a. mindestens einer der Anschlussflansche (30, 40) oder die Führungsschiene (42) liegt durch Angießen des Betons an die betreffende Komponente oder partiellem Umgießen der betreffende Komponente unmittelbar bündig an der Tragstruktur (20) aus Beton an.

11. Tragschiene (10) nach einem der vorstehenden Ansprüche mit den folgenden zusätzlichen Merkmalen:
a. der mindestens eine untere metallische Anschlussflansch (30) wird durch mindestens eine Bodenplatte (31) gebildet, die Bohrungen (32) zur Anbringung am Untergrund aufweist, wobei vorzugsweise eine Mehrzahl von zueinander beanstandeten Bodenplatten (31) vorgesehen ist, oder
b. der mindestens eine untere metallische Anschlussflansch (30) weist mindestens eine Gewindebohrung (36) zur Anbringung einer Bodenplatte (38) auf, wobei vorzugsweise eine Mehrzahl von Gewindebohrungen (36) zur Anbringung einer Mehrzahl von Bodenplatten (38) vorgesehen ist.

12. Tragschiene (10) nach einem der vorstehenden Ansprüche mit mindestens einem der folgenden zusätzlichen Merkmale:
a. die Tragstruktur (20) ist aus Zementbeton oder aus Polymerbeton hergestellt, und/oder
b. die Tragstruktur (20) ist aus Textilbeton hergestellt, und/oder
c. die Tragschiene hat in Haupterstreckungsrichtung eine Länge von mindestens 3 m, vorzugsweise zwischen 4 m und 8 m.

13. Verfahrsystem (110) für einen Roboter (130) mit den folgenden Merkmalen:
a. das Verfahrsystem (110) weist mindestens eine Tragschiene (10) mit mindestens einer daran vorgesehenen Führungsschiene (42) auf, und
b. das Verfahrsystem (110) weist mindestens eine Roboterplattform (120) auf, auf der bestimmungsgemäß ein Roboter (130) angeordnet wird,
**gekennzeichnet durch** das Merkmal:
c. die Tragschiene (10) ist nach einem der vorstehenden Ansprüche ausgebildet.

14. Verfahren zur Herstellung einer Tragschiene (10) für eine translativ verfahrbare Roboterplattform (120) nach einem der Ansprüche 4 bis 12 mit den folgenden Merkmalen:
a. es wird eine Metallstruktur (12) erstellt, die ein Exoskelett (90) und mindestens einen unteren metallischen Anschlussflansch (30) und mindestens einen oberen metallischen Anschlussflansch (40) bzw. eine Führungsschiene (42) umfasst, wobei diese mindestens zwei Teile vorzugsweise mit dem Exoskelett (90) verschweißt sind, und
b. die Metallstruktur (12) wird in eine Schalung (300) eingelegt, so dass eine Außenseite des Exoskeletts zumindest abschnittsweise flächig an der Schalung anliegt, und
c. die Schalung (200) wird anschließend mit Beton ausgegossen, so dass hierdurch die Tragstruktur (20) gebildet wird, wobei das Exoskelett (90), der mindestens eine Anschlussflansch (30) bzw. die Führungsschiene (42) zumindest abschnittsweise außerhalb einer Oberfläche der Tragstruktur angeordnet ist.

15. Verfahren zur Herstellung einer Tragschiene (10) für eine translativ verfahrbare Roboterplattform (120) nach einem der Ansprüche 1 bis 3 und 8 bis 12 mit den folgenden Merkmalen:
a. es wird ein metallisches Hohlprofil (72) mit einer Wandungsstärke von maximal 8 mm als äußere Begrenzung der Tragstruktur (20) bereitgestellt, und
b. in das Hohlprofil (72) wird eine metallische Innenstruktur (80) eingelegt, und
c. das Hohlprofil (72) wird anschließend mit Beton ausgegossen, so dass hierdurch die Tragstruktur (20) gebildet wird, die außenseitig durch die Wandungen des Hohlprofiles (72) begrenzt ist und in die die Innenstruktur (80) eingebettet ist.
